# DEMANDE DE BREVET EUROPEEN

(11) **EP 2 006 783 A1**
(43) Date de publication de la demande: **24.12.2008**
(21) Numéro de dépôt: 08290554.8
(22) Date de dépôt: 13.06.2008
(51) Int. Cl.: G06F 17/30

(54) **Procédé de description coopérative d'objets médias**

(30) Priorité: 15.06.2007 FR 0704255
(71) Demandeur: Alcatel, Lucent, 75008 Paris (FR)
(72) Inventeur: Nguyen, Hang, 75008 Paris (FR); Delegue, Gérard, 75008 Paris (FR)
(74) Mandataire: Louiset, Raphael

(57) **Abrégé**

Procédé de description d'un objet média (**6**), ce procédé comprenant les opérations suivantes :
- sélectionner au sein d'un serveur (**2**) un objet média (**6**) et une description (**8**) de celui-ci ;
- transmettre le média (**6**), accompagné de sa description (**6**), à un terminal (**3**) client relié au serveur (**2**) ;
- restituer l'objet média (**6**) et sa description (**8**) sur une interface (**10**) du terminal (**3**) ;
- acquérir au sein du terminal (**3**) de nouveaux éléments de description du média (**6**) ;
- transmettre depuis le terminal (**3**) les nouveaux éléments de description au serveur (**2**) ;
- mettre à jour au sein du serveur (**2**) la description (**8**) de l'objet média (**6**) en tenant compte des nouveaux éléments de description.

## Description

L'invention a trait à la description du contenu des objets médias.

Il y a peu, les moteurs de recherche tels que Google® ou encore Yahoo® ne permettaient d'effectuer des recherches que parmi des objets textuels.

Comme, en raison du nombre croissant d'objets multimédia (c'est à dire non textuels : vidéo, audio, image) stockés et/ou échangés, le besoin se fait pressant de pouvoir effectuer des recherches parmi de tels objets, des solutions d'indexation de ceux-ci ont été proposées. Ces solutions varient techniquement selon la nature de l'objet média considéré, mais le principe reste le même : effectuer une analyse du contenu du média et réaliser une description sémantique de celui-ci. Pour les objets vidéo par exemple, un standard de description - désormais reconnu - est la norme MPEG-7 (*Moving Picture Experts Group).*

La description peut être effectuée selon différents niveaux sémantiques, selon l'utilisation qui en sera faite. Ainsi, si la description est destinée à être stockée, en annexe du média, pour les besoins ultérieurs d'une recherche effectuée au moyen de robots, elle peut être de *bas niveau d'abstraction.* Si au contraire la description doit être restituée sur une interface utilisateur pour une lecture par l'homme, un *haut niveau d'abstraction* est requis.

Pour un objet visuel (vidéo) par exemple, un bas niveau d'abstraction donne une description des éléments suivants : forme, taille, texture, couleur, composition, tandis qu'un haut niveau d'abstraction donne une information sémantique en langage naturel. (cf. Guy Pujolle, Les Réseaux, 5e édition, 2005, p. 953).

Une application de l'analyse de contenu aux objets média de nature audio est esquissée dans JM Van Thong et al, Multimedia Content Analysis and Indexing : Evaluation of a Distributed and Scalable Architecture (HP Laboratories, Cambridge, août 2003).

Certaines techniques sont également brevetées : on pourra notamment se référer aux brevets américains US 6 236 395 et US 7 134 074, ou à la demande de brevet américain US 2005/0108775.

Si un bas niveau d'abstraction peut s'avérer utile pour indexer des objets média suivant des catégories prédéterminées, un niveau d'abstraction élevé est indispensable pour des applications grand public (telles que la télévision ou la téléphonie). Certaines propositions ont été faites pour permettre la restitution de métadonnées (utilisées pour la description de contenu) sur des interfaces grand public dans un univers de type broadcast, cf. la demande de brevet américain US 2002/0116471.

Toutefois, un inconvénient majeur des solutions connues est leur manque d'interactivité. L'invention vise notamment à pallier cette insuffisance.

A cet effet, l'invention propose un procédé de description de média comprenant les opérations suivantes :
- sélectionner au sein d'un serveur un objet média et une description de celui-ci ;
- transmettre le média, accompagné de sa description, à un terminal client relié au serveur ;
- restituer l'objet média et sa description sur une interface du terminal client ;
- acquérir au sein du terminal client de nouveaux éléments de description du média ;
- transmettre depuis le terminal client les nouveaux éléments de description au serveur ;
- mettre à jour au sein du serveur la description de l'objet média en tenant compte des nouveaux éléments de description.

Ce procédé rend possible un travail coopératif de description des objets médias, au sein d'une communauté organisée en réseau. Les nouveaux éléments de description peuvent être apportés - simultanément ou non - par plusieurs membres de la communauté, et intégrés - soit en ligne soit de manière différée - à la description commune stockée sur le serveur. Il en résulte une plus grande interactivité du travail de création des descriptions.

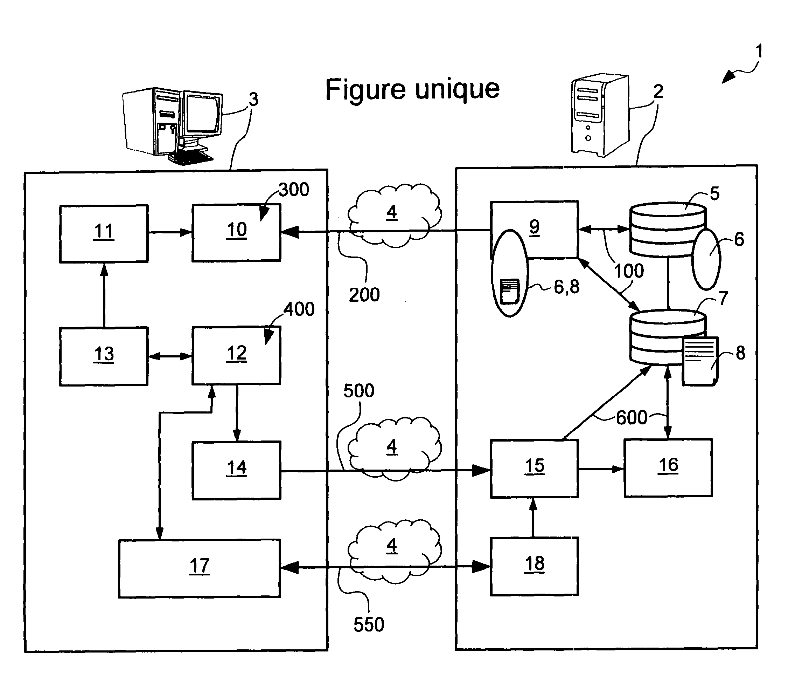

D'autres objets et avantages de l'invention apparaîtront à la lumière de la description faite ci-après en référence au dessin annexé qui est un schéma illustrant à la fois les étapes d'un procédé et l'architecture d'un système **1** permettant de réaliser des description d'objets médias.

Ce système **1** comprend un serveur **2** et un ou plusieurs terminaux clients **3** connectés au serveur **2** par l'intermédiaire d'un ou plusieurs liens réseau, au sein d'un réseau **4** local (*LAN*), métropolitain (*MAN*) ou étendu (*WAN*) tel que l'Internet.

Le serveur **2** comprend une première base de données **5** dans laquelle est stocké au moins un objet média **6** (en pratique, une multiplicité d'objets médias sont stockés sur cette base de données **5)** tel que vidéo, audio ou encore images stockés sous forme de fichiers informatiques susceptibles d'être restitués sur une interface du terminal, au moyen de codecs appropriés.

Le serveur **2** comprend une seconde base de données **7,** reliée à la base de données **5** de médias et dans laquelle est stockée au moins une description **8** sémantique de l'objet média **6** (en pratique, la base de données **7** comprend une multiplicité de descriptions **8** associées chacune à un objet média **6** stocké sur la base de données **5** de médias).

La description **8** se présente par exemple sous la forme d'un ensemble de métadonnées contenues dans un document établi dans un langage à balises de type XML (*eXtended Markup Language*)*.* Plus précisément, la description peut être établie suivant la norme MPEG-7 (*Moving Picture Experts Group*)*,* en utilisant le langage DDL *(Description Definition Language).*

Le serveur **2** comprend en outre un module **9** de diffusion, relié aux bases de données **5, 7** et programmé pour :
- sélectionner, d'une part au sein de la base de données **5** de médias un ou plusieurs objets médias **6,** d'autre part au sein de la base de données **7** de descriptions la description **8** correspondante, et
- transmettre le média **6** sélectionné, accompagné de sa description **8,** au terminal **3** ou au groupe de terminaux connectés au serveur **2.**

Il est à noter que le terme « module » recouvre ici tout boîtier physique intégrant un processeur programmé pour assurer une ou plusieurs fonctions prédéterminées, ou toute application logicielle (programme ou sous-programme, plugin) implémentée sur un processeur, indépendamment ou en combinaison avec d'autres applications logicielles.

Selon la programmation du module **9,** la diffusion peut être soit de type ciblé (*unicast*)*,* soit de type large (*broadcast*)*.*

Le terminal **3** comprend quant à lui une interface utilisateur **10** permettant de restituer, via un codec approprié implémenté dans le terminal **3** et par lequel transite le signal reçu du serveur **2,** le média **6** et sa description **8.**

Le terminal **3** comprend en outre un module **11** de contrôle permettant d'effectuer en différé sur le média **6** un certain nombre d'actions telles que pause, lecture, avance, retour, zoom, etc.

Le terminal **3** comprend également un module **12** d'acquisition, permettant à un utilisateur du terminal **3** de saisir, en lien avec l'objet média **6**, de nouveaux éléments de description.

Ces nouveaux éléments de description peuvent :
- compléter la description **8** existante, en introduisant par exemple dans des champs prédéfinis des données supplémentaires sous forme d'informations ou de commentaires, en remplaçant dans ces mêmes champs des données jugées erronées, ou encore en créant de nouveaux champs (les langages de type XML ou DDL, présentent cet avantage) et en y introduisant des données,
- ou bien être introduits dans un nouveau document de description indépendant de la description **8** existante.

Le terminal **3** comprend de préférence un module **13** de synchronisation de l'objet média **6** et des nouveaux éléments de description, relié au module **11** de contrôle et permettant à l'utilisateur d'associer contextuellement les nouveaux éléments de description ainsi introduits avec certaines parties de l'objet média **6**, suivant des critères temporels et/ou spatiaux (selon le type de média considéré). Ainsi, dans le cas d'une image, les nouveaux éléments pourront être associés à une sélection au sein de cette image. Dans le cas d'un objet audio, seul le critère temporel importera, les nouveaux éléments introduits par l'utilisateur pouvant être associés à des instants - ou à des intervalles - choisis dans la bande sonore. Dans le cas d'une vidéo, les deux critères pourront bien entendu être combinés.

Le terminal **3** comprend en outre une interface **14** de communication connectée, d'une part au module **12** d'acquisition et, d'autre part, au serveur **2** par un lien de type ciblé (*unicast*), éventuellement via le réseau **4** local, métropolitain ou étendu. Plus précisément, l'interface **14** de communication est reliée à un module **15** de collecte des nouveaux éléments de description de l'objet média **6,** ce module **15** de collecte étant relié à la base de données **7** des descriptions.

Le serveur **2** comprend un module **16** de mise à jour de la description **8** en tenant compte des nouveaux éléments collectés. Ce module **16** de mise à jour est relié, d'une part au module **15** de collecte et, d'autre part, à la base de données **7** des descriptions.

Suivant un mode de réalisation illustré sur le dessin, le terminal **2** comprend un module **17** d'authentification relié à un gestionnaire **18** de la sécurité, par exemple de type AAA (*Authentication, Authorization, Accounting*) pour assurer des fonctions d'authentification, de chiffrement et de facturation. Le gestionnaire **18** de la sécurité applique par exemple le protocole RADIUS (*Remote Authentication Dial-In User Service*) et se présente soit sous la forme d'un serveur indépendant, soit sous forme d'un module intégré au serveur **2.** Ce gestionnaire **18** de la sécurité est relié, d'une part à une base de données de profils utilisateurs (non représentée) et, d'autre part, au module **15** de collecte.

L'architecture qui vient d'être décrite permet de créer, compléter, modifier des descriptions **8** d'objets médias **6** diffusés depuis le serveur 2 à destination d'un ou plusieurs terminaux **3,** de la manière décrite ci-après.

Une première opération **100** consiste pour le serveur **2** à sélectionner un objet média **6** dans la base de données **5** des objets médias, et la description **8** correspondante dans la base de données **7** des descriptions. Cette sélection peut être réalisée de manière automatisée, en réponse à une requête adressée au serveur **2** par un ou plusieurs terminaux **3** (simultanément ou non). Dans le cadre d'un service de type VoD (Vidéo on Demand ou Vidéo à la demande), le terminal **3** abonné au service envoie une requête de téléchargement d'une vidéo sélectionnée parmi une liste prédéfinie correspondant à une partie ou à la totalité des vidéos stockées sur la base de données **5.**

Une deuxième opération **200** consiste pour le serveur **2** à transmettre le média **6,** accompagné de sa description, au terminal client **3.**

Une troisième opération **300** consiste, pour le terminal **2,** à restituer le média **6** et sa description **8** sur son interface **10** (qui comprend par exemple un écran et/ou un ou plusieurs haut-parleurs). Dans le cas d'une vidéo, celle-ci est lue sur l'écran, le son l'accompagnant étant restitué sur haut-parleur. La description **8** peut également être restituée, soit en simultané (par exemple par incrustation de texte dans l'image ou la vidéo, ou par affichage du texte de la description dans une fenêtre dédiée), soit en différé (par exemple à tout moment sur commande de l'utilisateur).

Une quatrième opération **400** consiste, pour le terminal, à acquérir via le module **12** d'acquisition, de nouveaux éléments de description du média **6** introduits par l'utilisateur. Comme nous l'avons vu, cette acquisition peut se faire par modification de la description **8** existante, telle qu'adressée au terminal **3** par le serveur **2.**

Selon un mode de réalisation évoqué plus haut, la description **8** se présente sous la forme d'un document XML ou DDL comprenant des balises et un ou plusieurs textes associés aux balises.

Lorsque l'acquisition des nouveaux éléments de description se fait par modification de la description **8** existante, cette acquisition peut consister à ajouter des balises et saisir du texte sous ces balises, modifier, annoter ou même supprimer du texte sous les balises existantes, ou encore modifier ou supprimer les balises elles-mêmes.

En variante, l'acquisition peut également se faire par création d'une nouvelle description (par exemple sous forme d'un document XML ou DDL) destinée à compléter la description **8** existante par agrégation à celle-ci.

Une cinquième opération **500** consiste, pour le terminal **3,** à transmettre les nouveaux éléments de description au serveur **2.** Les nouveaux éléments de description (contenus dans la description initiale modifiée ou dans la nouvelle description destinée à compléter la description **8** initiale) sont transmis par l'interface **14** de communication, de manière ciblée, au module **15** de collecte.

Le module **13** de synchronisation permet à l'utilisateur de synchroniser les nouveaux éléments de description et l'objet média **6**. Par exemple, dans le cas de l'introduction d'un nouveau sous-titre dans une vidéo, l'utilisateur peut sélection une plage temporelle au cours de laquelle le nouveau sous-titre est supposé être affiché.

Cette opération **500** de transmission peut être accompagnée d'une opération **550** d'authentification du terminal **3** par le serveur **2.** En pratique, l'opération d'envoi des nouveaux éléments de description active le gestionnaire **18** de la sécurité qui transmet au module **17** d'authentification une requête d'authentification. Dans l'hypothèse où l'authentification met en oeuvre un certificat, le module **17** d'authentification peut transmettre de manière automatique les éléments d'authentification au gestionnaire **18.** En variante, l'authentification peut être accomplie par saisie d'un identifiant et d'un mot de passe au sein du terminal **3** et communication de ceux-ci au gestionnaire **18** de la sécurité.

Une fois le terminal **3** dûment authentifié, une sixième opération **600** consiste, pour le serveur **2,** à mettre à jour la description **8** de l'objet média **6** en tenant compte des nouveaux éléments de description reçus du terminal **3.**

Dans l'hypothèse où le module **15** de collecte reçoit du terminal **3** une nouvelle version de la description initiale, incluant les nouveaux éléments de description, la mise à jour peut être réalisée directement par le module **15** de collecte en remplaçant la description initiale **8** par sa nouvelle version dans la base de données **7** des descriptions.

Dans l'hypothèse où le module **15** de collecte reçoit du terminal **3** les nouveaux éléments de description sous forme d'un document distinct de la description **8** existante, la mise à jour est effectuée par le module **16** de mise à jour qui agrège les nouveaux éléments de description à la description **8** existante.

Suivant un mode de réalisation, la mise à jour de la description **8** est subordonnée à un contrôle qualitatif des nouveaux éléments de description. Un tel contrôle peut être réalisé de différentes manières :
- de manière automatique par le serveur **2**, par exemple au sein du module **15** de collecte : il est possible de programmer celui-ci pour que certains termes prohibés soit supprimés des nouveaux éléments de description soumis, ou pour bloquer ces éléments dans l'hypothèse où ils contiendraient des termes prohibés ;
- par un ou plusieurs administrateurs ayant accès au serveur **2** et ayant en charge la relecture des nouveaux éléments de description ;
- ou encore, dans un cadre collaboratif, par une communauté d'utilisateurs auxquels les nouveaux éléments de description sont soumis pour validation, soit de manière systématique, soit lorsque les éléments de description proviennent d'un ou plusieurs terminaux prédéfinis dont les utilisateurs sont supposés soumis à un contrôle par les autres membres de la communauté.

Dans ce dernier cas, il est prévu une opération supplémentaire de transmission des nouveaux éléments de description à un ou plusieurs terminaux **3** (correspondant à la communauté ou à une partie de celle-ci) reliés au serveur **2**, suivie d'une opération de contrôle qualitatif réalisé au sein de ce terminal **3** ou de ces terminaux **3.** Les éléments validés (ou corrigés) sont ensuite retransmis par le terminal **3** ou les terminaux **3** concernés au serveur **2** pour mise à jour de la description **8.**

Le procédé qui vient d'être décrit (et l'architecture du système **1** qui permet d'en assurer la mise en oeuvre) présente un certain nombre d'avantages.

Il permet en effet de réaliser des descriptions grâce aux contributions coopératives d'une communauté (éventuellement restreinte) travaillant en réseau. Ce travail coopératif rend possible non seulement une augmentation substantielle du contenu des descriptions réalisées, mais également une amélioration de leur qualité à un niveau d'abstraction élevé. En particulier, grâce à la fonction d'agrégation/mise à jour des descriptions, plusieurs membres de la communauté peuvent travailler simultanément à une même description, chaque nouvelle contribution étant prise en compte pour reconstituer une description complète à jour.

Il est à noter que ce procédé est adaptable à différents types de communautés, suivant leur mode de fonctionnement : bénévole, marchand ou mixte. Il est possible d'incorporer au procédé un ou plusieurs modèles économiques, consistant par exemple à rémunérer ou récompenser certains membres de la communauté se distinguant par la qualité ou la quantité de leurs contributions. On pourra à cet effet programmer un service de facturation approprié dans le gestionnaire **18.**

## Revendications

1. Procédé de description d'un objet média (**6**), ce procédé comprenant les opérations suivantes :
- sélectionner au sein d'un serveur (**2**) un objet média (**6**) et une description (**8**) de celui-ci ;
- transmettre le média (**6**), accompagné de sa description (**6**), à un terminal (**3**) client relié au serveur (**2**) ;
- restituer l'objet média (**6**) et sa description (**8**) sur une interface (**10**) du terminal (**3**) ;
- acquérir au sein du terminal (**3**) de nouveaux éléments de description du média (**6**) ;
- transmettre depuis le terminal (**3**) les nouveaux éléments de description au serveur (**2**) ;
- mettre à jour au sein du serveur (**2**) la description (**8**) de l'objet média (**6**) en tenant compte des nouveaux éléments de description.

2. Procédé selon la revendication **1**, qui comprend une opération d'authentification du terminal (**3**), la mise à jour de la description (**8**) étant subordonnée à l'authentification du terminal (**3**) par le serveur (**2**).

3. Procédé selon la revendication 1 ou 2, dans lequel l'acquisition de nouveaux éléments de description consiste à incorporer ceux-ci dans la description (**8**) existante, la mise à jour consistant à remplacer la description (**8**) existante par la nouvelle description incluant les nouveaux éléments de description.

4. Procédé selon l'une des revendications 1 à 3, dans lequel l'acquisition de nouveaux éléments de description consiste à créer un nouveau document, la mise à jour consistant à agréger les nouveaux éléments de description à la description (**8**) existante.

5. Procédé selon la revendication 3 ou 4, qui comprend au sein du terminal (**3**) une opération de synchronisation des nouveaux éléments de description avec l'objet média (**6**).

6. Procédé selon l'une des revendications 3 à 5, dans lequel la mise à jour de la description (**8**) est subordonnée à un contrôle qualitatif des nouveaux éléments de description.

7. Procédé selon la revendication 6, qui comprend une opération de transmission des nouveaux éléments de description à un ou plusieurs terminaux (**3**) reliés au serveur (**2**), et une opération de contrôle qualitatif réalisé au sein de ce terminal (**3**) ou de ces terminaux (**3**).

8. Procédé selon l'une des revendications 1 à 7, dans lequel la description (**8**) du média (**6**) est contenue dans un document établi dans un langage à balises de type XML.

9. Système (**1**) comprenant :
- un serveur (**2**) contenant :
- une base de données (**5**) dans laquelle est stocké au moins un objet média (**6**),
- une base de données (**7**) dans laquelle est stockée au moins une description (**8**) de cet objet média (**6**),
- un module (**15**) de collecte de nouveaux éléments de description de l'objet média (**6**),
- un module (**16**) de mise à jour de la description (**8**) en tenant compte des nouveaux éléments,
- un terminal (**3**) client relié au serveur (**3**), ce terminal (**2**) comprenant :
- une interface (**10**) pour la restitution de l'objet média (**8**) et de sa description (**8**),
- un module (**12**) d'acquisition de nouveaux éléments de description,
- une interface (**14**) de communication reliée au module (**12**) d'acquisition et au module (**15**) de collecte.

10. Système (**1**) selon la revendication 9, qui comprend en outre, dans le terminal (**3**), un module (**13**) de synchronisation de l'objet média (**6**) et des nouveaux éléments de description.
